# EUROPÄISCHE PATENTSCHRIFT

(11) **EP 1 080 625 B1**
(45) Veröffentlichungstag und Bekanntmachung des Hinweises auf die Patenterteilung: **24.09.2003**
(21) Anmeldenummer: 00116506.7
(22) Anmeldetag: 31.07.2000
(51) Int. Cl.: A01D 46/24, B60P 1/64

(54) **Schwenkvorrichtung für das Abladen von Behältern von einem Fahrzeug**
Pivoting device for the discharging of a container from a vehicle
Dispositif de pivotement pour le déchargement d'un contenant d'un vehicule

(30) Priorität: 06.08.1999 IT BZ990034
(43) Veröffentlichungstag der Anmeldung: 07.03.2001
(73) Patentinhaber: MECCANICA ZUCAL SNC, 38010 Romeno (TN) (IT)
(72) Erfinder: Zucal, Sergio, 38010 Romeno (TN) (IT)
(74) Vertreter: Oberosler, Ludwig

(56) Entgegenhaltungen:
- EP-A- 0 580 205
- FR-A- 1 024 298
- NL-A- 7 802 319
- US-A- 5 000 645

## Beschreibung

Die Erfindung betrifft eine Schwenkvorrichtung für das Abladen von Behältern von einem Fahrzeug entsprechend dem Oberbegriff des Anspruchs 1.

Es ist das Abladen voller Behälter von einem Erntefahrzeug oder das Abladen von Waren von einer Ladefläche mittels kippbarer und vertikal betätigbarer Ladebordwand bekannt, diese Vorrichtungen bestehen wesentlich aus Hebemechanismen welche meistens an der Rückseite des Fahrzeuges angebracht sind und nach Art einer Staplergabel funktionieren oder aus einem Paar von Hydraulikzylinder welche mit einem zweiten Zylinderpaar oder mit einem Schwenkhebelpaar ein Parallelogramm bilden. Weiters ist es bekannt an der Rückseite von Erntefahrzeugen eine Rutsche vorzusehen längs welcher die vollen Behälter frei oder gebremst von der Ladefläche gegen den Boden rutschen. Diese bekannten Vorrichtungen sind jedoch für Erntefahrzeuge wo der Behälter auf bekannte Art während der Ablage der Früchte rotiert, um so eine gleichmäßige Verteilung der Früchte zu erreichen und ein übermäßiges Rollen der Früchte auf den vorher abgelegten Früchten zu verhindern, ungeeignet. Vorrichtungen dieser Art sind zum Beispiel aus der NL 7802319 bekannt und bestehen aus einer, gemäß vertikaler Achse, rotierender Ladefläche welche auf einem hydraulisch, zwischen einer horizontalen Stellung und einer angewinkelten Entladestellung, bewegten Kipprahmen gelagert ist. Eine verbesserte Vorrichtung dieser Art ist in der NL 9201298 beschrieben.
Diese letztere Lösung weist jedoch mehrere Mängel, wie die umständliche und daher kostenaufwendige Bauart, die wenig verläßliche Funktion und die Kippbewegung welche nicht ein Entladen ohne Rollen der im Behälter enthaltenen Früchte garantiert, auf.

Die Erfindung stellt sich die Aufgabe eine Kippvorrichtung für das Entladen von Behältern von einem Fahrzeug auf den Boden zu schaffen welche einfacher Bauart ist, zuverlässig funktioniert, wenig Platz einnimmt und während der Abladebewegung eine derartige Bewegung ausführt, daß das Rollen der im Behälter enthaltenen Früchte vermieden wird.

Die Erfindung lost diese Aufgabe mit einer Schwenkvorrichtung gemäß Anspruch 1. Weitere vorteilhalfe Ausgestaltungen der Erfindung stud in den abhängigen Ansprüchen dargestellt. Die Erfindung schlägt den Einsatz eines einzigen Hydraulikzylinders vor, welcher mittels einem System von Schwenkarmen und Führungen es ermöglicht den spezifischen Arretiermechanismus um die Ladefläche in horizontaler Lage zu blockieren, zu eliminieren, eines Mechanismus für den rotierenden Antrieb der Ladefläche welcher unabhängig vom Antrieb des Fahrzeuges funktioniert und eines automatischen Arretiermechanismus welcher die Position des Behälters auf der Ladefläche sichert, vor.

Erfindungsgemäß ist die Ladefläche auf einem Schwenkrahmen so gelagert, daß die Ebene welche die Auflagefläche für die rotierende Ladefläche enthält in einer Position verläuft welche, während aller Positionen welche die Ladefläche während des Entladens und während der horizontalen Position einnimmt, die Umfangslinie der entsprechenden Räder des Fahrzeuges durchschneidet. Dies ermöglicht, daß ein maximales Absenken der Ladefläche in Bezug auf die Räder, eine bessere Stabilität des Mechanismus und eine nicht übermäßige Neigung des Behälters während des Entladens erreicht wird. Zwecks Vereinfachung des Antriebs für die Rotation der Ladefläche wird der Antrieb durch Elektromotor mit Übertragung der Bewegung auf die, am Schwenkrahmen gelagerte, Ladefläche mittels Riemen vorgeschlagen. Der Elektromotor mit vorzugsweise variierbarer Drehzahl ist am Schwenkrahmen angebracht und vorzugsweise mit Untersetzungsgetriebe ausgestattet dessen Ausgang eine Riemenscheibe für einen Keilriemen trägt welcher eine Riemenscheibe antreibt die unterhalb der Ladefläche angebracht ist, ohne jedoch die Übertragung der Bewegung über Kette oder Zahnräder auszuschließen. Die Lagerung der Ladefläche am Schwenkrahmen kann durch Drehplatte oder durch einen, unterhalb von der Ladefläche, bzw. oberhalb vom Schwenkrahmen, abstehenden Lagerzapfen erfolgen. Die Auflagefläche zwischen der Struktur der Ladefläche und dem Schwenkrahmen ist in einer Ebene enthalten welche die Umfangslinie der entsprechenden Räder des Fahrzeuges durchschneidet.
Der Kippmechanismus ist erfindungsgemäß aus einem einzigen Paar von Schwenkarmen oder von Doppelschwenkarmen gebildet welche an einer einzigen, quer zur Längsachse des Fahrzeuges und parallel zur Achse der Räder des selben, verlaufenden Welle befestigt sind, wobei die Rotationsachse dieser Welle auf der Umfangslinie oder außerhalb der Umfangslinie der Räder liegt. An der selben, direkt am Fahrzeugrahmen oder an daran befestigten Lagerböcken, drehbar gelagerten Welle ist ein Hebel oder ein Doppelhebel befestigt an dessen Ende der Kolben eines einzigen, am Fahrzeugrahmen gelagerten, Hydraulikzylinders wirkt. Diese Lösung ermöglicht es den Hydraulikzylinder in einer seitlichen Lage vorzusehen wo ausreichend Platz vorhanden ist um, während der Schwenkbewegung, nicht mit anderen Teilen zu interferieren. Die Erfindung schließt allerdings nicht aus, daß der Zylinder auf einen der Lenkarme oder direkt auf den Schwenkrahmen wirkt. Am Ende des Schwenkarmpaares ist der Schwenkrahmen im hinteren Bereich des Schwenkrahmens angelenkt welcher die rotierende Ladefläche trägt. Der selbe Schwenkrahmen ist im vorderen Bereich in Führungen oder Leitschienen geführt welche an, seitlich mit dem Fahrzeugrahmen oder mit der Struktur des Fahrzeuges, fest verbundenen Platten vorgesehen sind. Der Verlauf dieser Leitschienen oder Führungen ist erfindungsgemäß derart, daß die Ladefläche, bzw. der Behälterboden, sich während der Schwenkbewegung nach einer Bahn bewegt welche möglichst nahe dem Umfang der Räder verläuft, wobei während der Entladebewegung ein Anheben zumindest jenes Teiles des Schwenkrahmens welcher in den besagten Führungen oder Leitschienen läuft vermieden wird.

Um die horizontale Stellung der Ladefläche zu sichern werden erfindungsgemäß keine mechanischen Vorrichtungen vorgesehen welche zwischen den schwenkbaren Teilen und der feststehenden Fahrzeugstruktur wirken, sondern der Durchfluss für den Hydraulikzylinder unterbrochen, wodurch der Kolben blockiert und der Schwenkrahmen in horizontaler Stellung arretiert wird. Um die horizontale Stellung zusätzlich zu sichern, schlägt die Erfindung vor, daß die Enden der Schwenkarme bei horizontaler Stellung des Schwenkrahmens, in Bezug auf eine senkrechte Linie welche durch die Drehachse der Schwenkarme läuft, eine leicht nach vorne (in Richtung Antriebskolben) geneigte Position einnehmen. Diese Anordnung bewirkt, daß um die Bewegung zu beginnen welcher die Ladefläche gegen den Boden schräg absenkt, diese in einer ersten Phase leicht angehoben wird bis die Schwenkarme eine vertikale Stellung einnehmen, diese Bewegung kann also nur durch Betätigung des Hydraulikzylinders und somit infolge einer Schaltbetätigung erfolgen, und nicht z.B. unbeabsichtigt durch ein ruckartiges plötzliches Starten des Fahrzeuges. Insbesondere beim Transport von Behältern für die Ernte von Früchten welche am Boden Distanzklötze aufweisen welche so angeordnet sind, daß die Gabel eines Staplers eingeführt werden kann, schlägt die Erfindung vor, daß die Ladefläche, in Längsrichtung angeordnete Auflagen aufweisen kann, welche so angeordnet sind, daß sie zwischen den besagten Auflageklötzen liegen um so ein weiteres Absenken des Behälters in die Nähe des Radumfanges des Fahrzeuges zu erreichen.

Die Erfindung schließt nicht aus, daß die horizontale Stellung der Ladefläche zusätzlich oder auch ausschließlich durch Kerben in den Führungen oder Leitschienen gesichert wird, in diesem Fall ist natürlich am Beginn der Schwenkbewegung ein leichtes Anheben aus den Kerben erforderlich.

Die Nutzung von Führungen oder Leitschienen ermöglicht es der Ladefläche, während der Absenk- und Schwenkbewegung eine Bahn vorzugeben welche möglichst nahe dem Umfang der Räder des Fahrzeuges verläuft und gleichzeitig die Kreisbogenförmige Bewegung des an den Schwenkarmen angelenkten Teiles kompensiert.

Die Erfindung schließt weiters nicht aus, auch an Stelle der Schwenkarme, Führungen oder Leitschienen vorzusehen wobei in diesem Fall eine Bahn vorgegeben werden kann welche unterschiedlich zur kreisbogenförmigen Bahn der Schwenkarme verläuft und gegebenenfalls für den entsprechenden Einsatz günstiger ist; in diesem Fall wirkt der Hydraulikzylinder direkt oder über Arme oder Hebel auf den Schwenkrahmen indem dieser in die angewinkelte Position geschoben, bzw. in die horizontale Position gezogen wird.

Dadurch, daß für die Drehung der Ladefläche ein vom Fahrzeugantrieb unabhängiger Antrieb vorgesehen ist, ist es möglich auf einfache Weise eine stufenlose Regelung der Drehzahl und das Arretieren der Ladefläche in, zur Fahrzeugachse, paralleler oder koachsialer Position zu erreichen welche automatisch vor der Schwenkbewegung eingenommen wird indem ein entsprechendes Konsensorgan vorgesehen ist.

Erfindungsgemäß ist an der Ladefläche ein Mechanismus mit feststehendem oder beweglichem Anschlag vorgesehen durch welchen ein selbsttätiger Blockiermechanismus betätigt wird welcher auf die Abstandsklötze oder auf andere Teile des Behälters wirkt um diesen auf der Ladefläche festzuhalten.

Die Erfindung wird anschließend anhand eines vorzuziehenden Ausführungsbeispieles eines in den beiliegenden Zeichnungen schematisch dargestellten, erfindungsgemäßen Schwenkmechanismus für das Abladen eines Behälters von einem Fahrzeug, näher erklärt, wobei die Zeichnungen einen rein erklärenden, nicht begrenzenden, Zweck erfüllen.

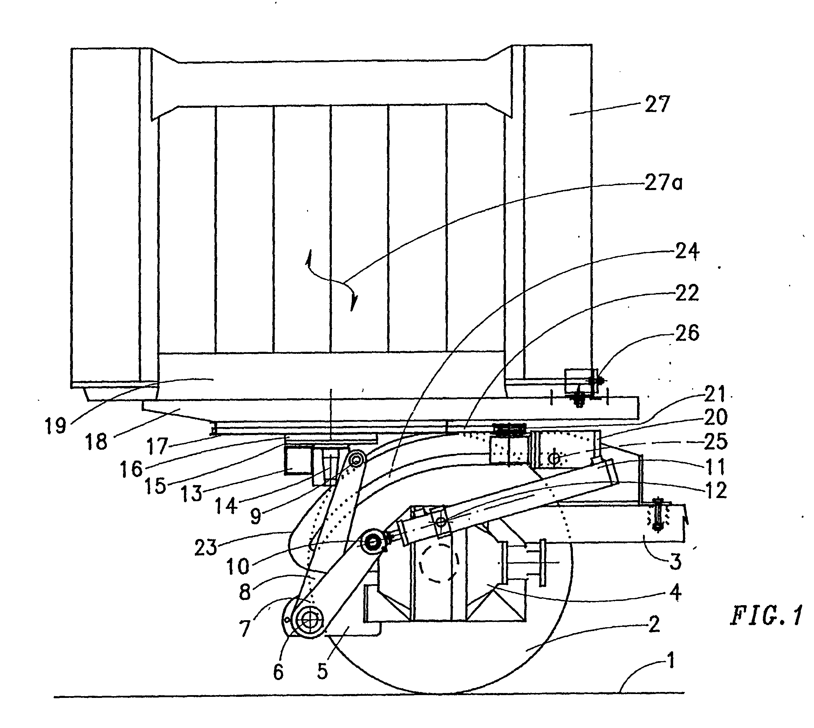

Die Fig. 1 ist eine schematische Seitenansicht des erfindungsgemäßen Schwenkmechanismus für das Abladen eines Behälters von einem Fahrzeug mit der Ladefläche samt Behälter für die Früchte in horizontaler Stellung und ohne vordergründlichem Rad.

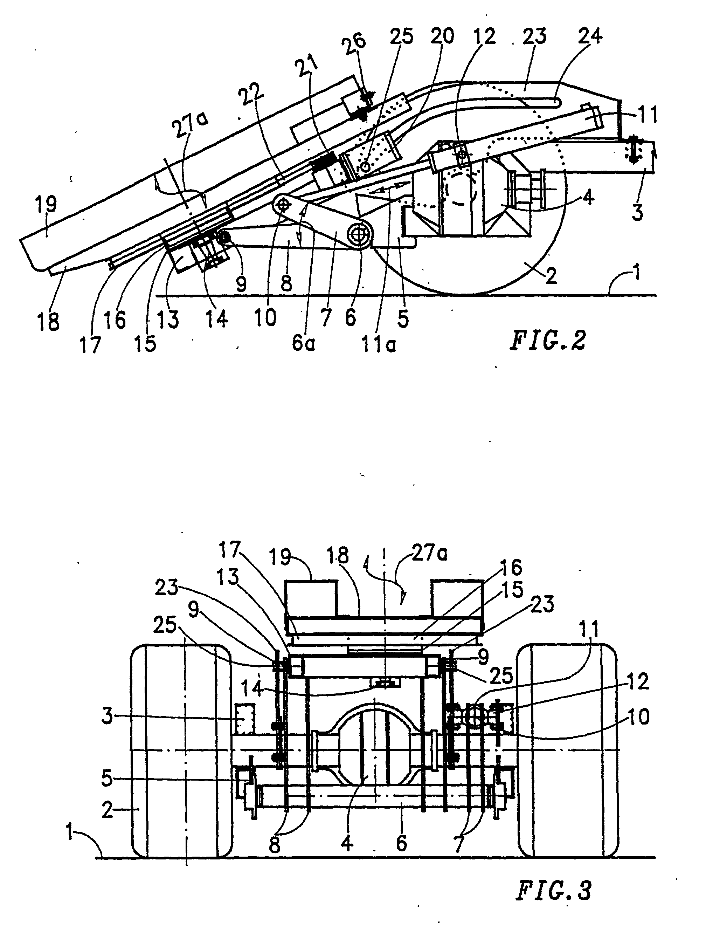

Die Fig. 2 ist eine schematische Seitenansicht der in Fig. 1 dargestellten Vorrichtung mit zum Boden geneigter, abgesenkter Ladefläche, ohne Behälter und ohne vordergründlichem Rad.

La Fig. 3 ist die schematische Vorderansicht der in den Fig. 1 und 2 dargestellten Vorrichtung mit der Ladefläche ohne Behälter.

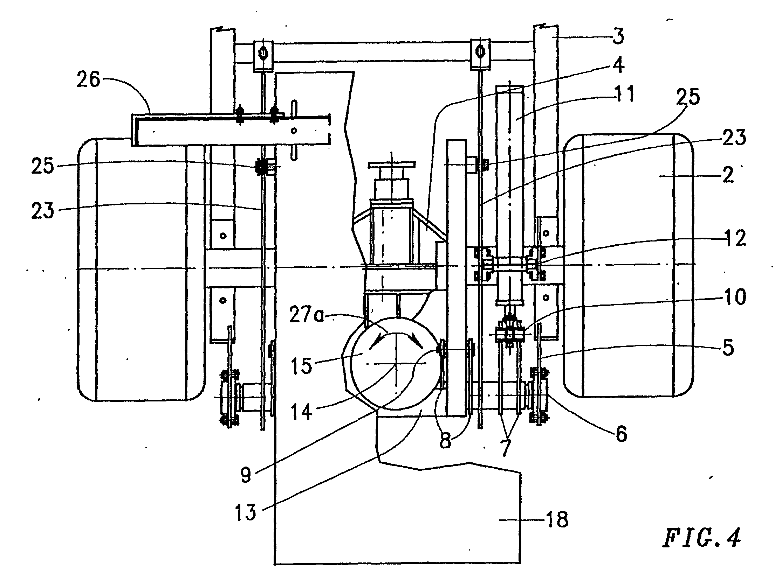

Die Fig. 4 ist eine schematische Draufsicht der in den Fig. 1 und 2 dargestellten Vorrichtung mit der Struktur der Ladefläche so im Schnitt dargestellt, daß der darunterliegende Schwenkmechanismus sichtbar ist.

Das Fahrzeug an welchem, vorzugsweise hinten, die erfindungsgemäße Vorrichtung für das Abladen von Behältern angebracht ist, liegt mittels der Räder 2 mit Achse 4 welche über Differenzial angetrieben werden am Boden 1 auf. Am Rahmen 3 des Fahrzeuges ist mittels Lager 5 eine drehbare 6a Welle 6 angebracht an welche ein Doppelhebel 7 und zwei Doppelschwenkarme 8 angeschweißt sind. Am Ende des Doppelhebels 7 wirkt 11a mittels Zapfen 10 der Kolben des Hydraulikzylinders 11 welcher an der festen Struktur des Fahrzeuges angelenkt 12 ist. Durch die Betätigung des Doppelhebels 7 werden über die Welle 6 auch die Doppelschwenkhebel 8, deren Enden seitlich im hinteren Bereich eines Schwenkrahmens 13 angelenkt 9 sind, bewegt 6a. Der selbe Schwenkrahmen 13 ist im vorderen Bereich über Zapfen 25 welche in Führungen 24 an, mit der feststehenden Struktur des Fahrzeuges, fest verbundenen Platten 23 vorgesehen sind, geführt. Im hinteren Bereich des Schwenkrahmens 13 ist eine Drehlagerung 14 für die Ladefläche 19 vorgesehen welche einen Unterbau 18 aufweisen kann und mit einer Riemenscheibe 17 oder einem Zahnkranz sowie mit einem Befestigungsflansch 16 ausgestattet ist welcher dem, mit Zapfen 14 ausgestatteten, Gegenflansch 15 entspricht.

Die Ladefläche 19 wird von einem Elektromotor 20 mit Getriebe und über Riemenscheibe für Riemen 20, bzw. über Zahnrad für eine Antriebskette, angetrieben. Diese einfache und unabhängige Antriebsart ermöglicht es die Drehzahl der Ladefläche 19 zu variiren und ein Konsenselement vorzusehen um die Drehbewegung 27a der Ladefläche 19 in koachsialer oder paralleler Position zur Fahrzeuglängsachse zu arretieren welche die geeignete Stellung ist um das Schwenken in Richtung Boden für das Abladen des Behälters durchzuführen. An der Ladefläche 19 kann in vorderer Position ein feststehender oder beweglicher Anschlag 26 vorgesehen sein welcher in diesem letzteren Fall ein Festhalteelement betätigt um den Behälter 27 auf der Ladefläche selbsttätig zu blockieren.
Vorteilhafterweise nimmt das Paar der Schwenkarme 8, mit der Ladefläche in horizontaler Position, eine Stellung ein welche jenseits der vertikalen Linie liegt welche durch die Drehachse der Welle 6 läuft, wodurch die horizontale Stellung der Ladefläche 19 gesichert wird, welche jedoch erindungsgemäß bereits durch das Unterbrechen der Leitung für den Zylinder 11 gesicher ist. Eine weitere Möglichkeit diese Position gegen ein unbeabsichtigtes Schwenken zu sichern kann durch Kerben erfolgen welche in mehr oder weniger ausgeprägter Form am entsprechenden Endbereich der Führungen 24 vorgesehen sein können.

## Patentansprüche

1. Schwenkvorrichtung für das Abladen von Behältern von einem Fahrzeug bestehend aus einer um eine senkrechte Achse an einem, seinerseits im Bereich der Vorder- oder der Hinterräder gelagertem, Schwenkrahmen drehbar gelagerten Ladefläche, **dadurch gekennzeichnet, daß** die Auflagefläche, zwischen der Struktur der Ladefläche (15, 16, 18, 19) und jener der Lagerung (14) am Schwenkrahmen (13), innerhalb einer Ebene liegt welche in beiden extremen Schwenkpositionen die Umfangslinie der Räder (2) des Fahrzeuges durchschneidet, daß die gemeinsame Achse des Paares der Schwenkarme oder Doppelschwenkarme (8) welche mit ihren Enden am Schwenkrahmen (13) angelenkt (9) sind und des Betätigungshebels oder Doppelhebels (7) parallel zur Achse (4) der Räder (2) verläuft und zwar durch die Umfangslinie oder außerhalb der Umfangslinie der Räder (2) und **daß** der Schwenkrahmen (13) im entgegengesetzten Bereich zu jenem der Anlenkung (9) der Schwenkarme (8) mittels Zapfen (25) oder Rollorganen innerhalb, mit der Struktur des Fahrzeuges fest verbundener, Führungen (24) oder an Leitschienen geführt ist.

2. Schwenkvorrichtung gemäß Anspruch 1, **dadurch gekennzeichnet, daß** ein einziger Hydraulikzylinder (11) welcher an der feststehenden Struktur des Fahrzeuges angelenkt (12) ist auf das Ende (10) eines Antriebhebels oder Doppelhebels (7) wirkt (11a) welcher direkt mit mindestens einem Schwenkhebel (8) oder direkt mit dem Schwenkrahmen (13) in Verbindung steht und **daß** dieser Zylinder mit einem Absperrorgan für den Durchfluß des Druckmittels ausgestattet ist um die horizontale Position der Ladefläche (19) zu sichern.

3. Schwenkvorrichtung gemäß Anspruch 1, **dadurch gekennzeichnet, daß** die horizontale Position der Ladefläche dadurch gesichert wird, daß in dieser Position die Schwenkarme (8) eine Position einnehmen welche schräg jenseits der vertikalen Linie liegt welche durch die Drehachse (6) der Schwenkarme verläuft und **daß** der selbe Effekt erzielt werden kann indem an den Führungen (24) oder Leitschienen, entsprechend der Endposition der, in diesen laufenden, Zapfen (25) oder Rollorgane, Kerben oder Vorsprünge vorgesehen sind.

4. Schwenkvorrichtung gemäß Anspruch 1, **dadurch gekennzeichnet, daß** der Verlauf der Führungen (24), bzw. der Leitschienen, derart ist, daß während der Absenkbewegung und der Neigung gegen den Boden der Ladefläche (19), mit Ausnahme von sehr kurzen Strecken, zwecks Überwindung der Arretierung in horizontaler Position, ein Anheben und eine Entfernung in Bezug zu den Rädern (2) vermieden wird.

5. Schwenkvorrichtung gemäß Anspruch 1, **dadurch gekennzeichnet, daß** die Schwenkarme (8) durch Führungen oder Leitschienen ersetzt sind entlang welcher Zapfen oder Rollorgane, ähnlich den Zapfen (25) laufen.

6. Schwenkvorrichtung gemäß Anspruch 1, **dadurch gekennzeichnet, daß** die Ladefläche (19) die Auflage des Behälters (27) in einem Bereich zwischen den Auflageklötzen welche vom Behälterboden abstehen ermöglicht und **daß** die darunterliegende Struktur (18) der Ladefläche derart bemessen sein kann, daß die Abstandsklötze des Behälters (27), während der Schwenkbewegung der Ladefläche (19), möglichst nahe an der Umfangslinie der darunterliegenden Räder (2) sich vorbeibewegen.

7. Schwenkvorrichtung gemäß Anspruch 1, **dadurch gekennzeichnet, daß** die Ladefläche (19) mit einem querverlaufenden Anschlag (26) für den Behälter (27) ausgestattet ist und **daß** dieser Anschlag fest oder beweglich sein kann wobei in letzterem Fall ein Arretiermechanismus welcher vorzugsweise auf die Abstandsklötze des Behälters (27) wirkt, betätigt wird.

## Claims

1. Pivoting apparatus for unloading containers from a vehicle, comprising a loading surface which is mounted in a manner such that it rotates about a vertical axis on a pivoting frame mounted, for its part, in the region of the front wheels or the rear wheels, **characterized in that** the supporting surface, between the structure of the loading surface (15, 16, 18, 19) and that of the mounting (14) on the pivoting frame (13), lies within a plane which, in both extreme pivoted positions, intersects the circumferential line of the wheels (2) of the vehicle, **in that** the common axis of the pair of pivoting arms or double pivoting arms (8), which are articulated (9) with their ends on the pivoting frame (13), and of the actuating lever or double lever (7) runs parallel to the axis (4) of the wheels (2), specifically through the circumferential line or outside the circumferential line of the wheels (2), and **in that** the pivoting frame (13), in the region opposite to that of the articulation (9) of the pivoting arms (8), is guided by means of journals (25) or rolling elements within guides (24) or guide rails connected fixedly to the structure of the vehicle.

2. Pivoting apparatus according to Claim 1, **characterized in that** a single hydraulic cylinder (11) which is articulated (12) on the fixed structure of the vehicle (11a) acts on the end (10) of a drive lever or double lever (7) which is connected directly to at least one pivoting lever (8) or directly to the pivoting frame (13), and **in that** this cylinder is provided with a shut-off element for the passage of the pressure medium, in order to secure the horizontal position of the loading surface (19).

3. Pivoting apparatus according to Claim 1, **characterized in that** the horizontal position of the loading surface is secured by, in this position, the pivoting arms (8) assuming a position which lies obliquely on the other side of the vertical line which runs through the axis of rotation (6) of the pivoting arms, and **in that** the same effect can be obtained by notches or projections being provided on the guides (24) or guide rails corresponding to the end position of the journals (25) or rolling elements running in them.

4. Pivoting apparatus according to Claim 1, **characterized in that** the profile of the guides (24) or of the guide rails is such that raising the pivoting device and moving it away from the wheels (2) during the lowering movement and inclination relative to the floor of the loading surface (19) is avoided with the exception of very short distances for the purpose of overcoming the locking in the horizontal position.

5. Pivoting apparatus according to Claim 1, **characterized in that** the pivoting arms (8) are replaced by guides or guide rails along which journals or rolling elements run in a similar manner to the journals (25).

6. Pivoting apparatus according to Claim 1, **characterized in that** the loading surface (19) makes it possible for the container (27) to be supported in a region between the supporting blocks which protrude from the container base, and **in that** the underlying structure (18) of the loading surface can be dimensioned in such a manner that the spacer blocks of the container (27) move as close as possible past the circumferential line of the wheels (2) lying under it during the pivoting movement of the loading surface (19).

7. Pivoting apparatus according to Claim 1, **characterized in that** the loading surface (19) is equipped with a transversely running stop (26) for the container (27), and **in that** this stop can be fixed or moveable, a locking mechanism which preferably acts on the spacer blocks of the container (27) being actuated in the latter case.

## Revendications

1. Dispositif de pivotement pour le déchargement de contenants d'un véhicule, formé d'une surface de chargement montée à rotation autour d'un axe vertical sur un cadre pivotement, de son côté monté dans la zone des roues avant ou des roues arrière, **caractérisé en ce que** la face de pose, entré la structure de la surface de chargement (15, 16, 18, 19) et celle du montage en paliers (14) sur le cadre pivotement (13), est située à l'intérieur d'un plan qui coupe dans les deux positions pivotées extrêmes la circonférence des roues (2) du véhicule, **en ce que** l'axe commun de la paire de bras pivotants ou des bras pivotants doubles (8), qui sont articulés (9) par leurs extrémités sur le cadre pivotement (13) et le levier d'actionnement ou le levier double (7), s'étend parallèlement à l'axe (4) des roues (2) et, précisément, en passant par la circonférence ou à l'extérieur de la circonférentielle des roues (2), et **en ce que** le cadre pivotant (13), dans la zone opposée à celle de l'articulation (9) des bras pivotants (8), est guidé à l'aide de tétons (25) ou d'organes de roulement, à l'intérieur de guidages (24) ou sur des rails de guidage, reliés rigidement à la structure du véhicule.

2. Dispositif de pivotement selon la revendication 1, **caractérisé en ce qu'**un vérin hydraulique (11) unique, articulé (12) sur la structure fixe du véhicule, agit (11a) sur l'extrémité (10) d'un levier d'entraînement, ou d'un levier double (7), placé en liaison directement avec au moins un levier pivotant (8) ou directement avec le cadre pivotant (13), et **en ce que** ce vérin est équipé d'un organe d'isolement pour le passage du fluide sous pression, afin d'assurer la position horizontale de la surface de chargement (19).

3. Dispositif de pivotement selon la revendication 1, **caractérisé en ce que** la position horizontale de la surface de chargement est assurée par le fait que, dans cette position, les bras pivotants (8) prennent une position oblique au-delà de la ligne verticale qui passe par l'axe de rotation (6) du bras pivotant, et que le même effet peut être obtenu par le fait que l'on prévoit, sur les guidages (24) ou sur les rails de guidage, de manière correspondante à la position finale des tétons (25) ou des organes de roulement se déplaçant dans ceux-ci, des entailles ou des saillies.

4. Dispositif de pivotement selon la revendication 1, **caractérisé en ce que** l'allure des guidages (24) ou des rails de guidage est telle que, pendant le mouvement d'abaissement et l'inclinaison vers le sol de la surface de chargement (19), à l'exception de très courtes distances, dans le but de surmonter le blocage produit en position horizontale, on évite une levée et un écartement par rapport aux roues (2) .

5. Dispositif de pivotement selon la revendication 1, **caractérisé en ce que** les bras pivotants (8) sont remplacés par des guidages ou des rails de guidage, le long desquels se déplacent des tétons ou des organes de roulement, analogues à un téton (25).

6. Dispositif de pivotement selon la revendication 1, **caractérisé en ce que** la surface de chargement (19) permet la pose du contenant (27) dans une zone située entre les blocs de pose à distance du fond du contenant, et **en ce que** la structure (18) sous-jacente de la surface de chargement peut être dimensionnée de manière que les blocs d'espacement du contenant (27), pendant le mouvement de pivotement de la surface de chargement (19), passent aussi près que possible de la circonférence des roues (2) sous-jacentes.

7. Dispositif de pivotement selon la revendication 1, **caractérisé en ce que** la surface de chargement (19) est munie d'une butée (26) s'étendant transversalement pour le contenant (27), et **en ce que** cette butée peut être stationnaire ou mobile, sachant que, dans ce dernier cas, est actionné un mécanisme de blocage qui agit de préférence sur les blocs d'espacement du contenant (27).
